# EUROPÄISCHE PATENTSCHRIFT

(11) **EP 2 018 491 B1**
(45) Veröffentlichungstag und Bekanntmachung des Hinweises auf die Patenterteilung: **30.12.2009**
(21) Anmeldenummer: 07725125.4
(22) Anmeldetag: 11.05.2007
(51) Int. Cl.: F16D 65/00

(54) **GERÄUSCHDÄMPFUNG FÜR EINE RUHESTROMBETÄTIGTE, ELEKTROMAGNETISCHE FEDERDRUCKBREMSE**
NOISE DAMPING FOR A QUIESCENT-CURRENT-ACTUATED, ELECTROMAGNETIC SPRING PRESSURE BRAKE
AMORTISSEMENT DES BRUITS POUR UN FREIN À RESSORT ÉLECTROMAGNÉTIQUE ACTIONNÉ PAR UN COURANT DE REPOS

(30) Priorität: 13.05.2006 DE 102006022491
(43) Veröffentlichungstag der Anmeldung: 28.01.2009
(73) Patentinhaber: Chr. Mayr GmbH & Co. KG, 87665 Mauerstetten (DE)
(72) Erfinder: KLINGLER, Günther, 86869 Oberostendorf (DE); WEISS, Harald, 87677 Stöttwang (DE); DROPMANN, Christoph, 87600 Kaufbeuren (DE)
(74) Vertreter: Ruschke, Hans Edvard
(86) Internationale Anmeldenummer: PCT/EP2007/004205
(87) Internationale Veröffentlichungsnummer: WO 2007/131726

(56) Entgegenhaltungen:
- EP-A2- 0 326 966
- EP-B1- 0 907 840
- DE-A1- 19 500 589

## Beschreibung

Die Erfindung bezieht sich auf eine Geräuschdämpfung einer Bremse, insbesondere einer ruhestrombetätigten, elektromagnetischen Federdruckbremse, wie sie aus den Unterlagen der EP 0 907 840 B1 bekannt sind, siehe dort insbesondere die Ansprüche 9 und 10.

Bei herkömmlichen Bremsen dieser Art wird die eine Hälfte des Bremsmomentes beim Abbremsen des Rotors direkt an die Maschinenwand und die zweite Hälfte des Bremsmomentes vom Rotor über die Ankerscheibe der Bremse auf eine Buchse übertragen, welche mit einer Befestigungsschraube an die Maschinenwand angeschraubt wird und somit die zweite Hälfte des Bremsmomentes an die Maschinenwand überträgt. Somit wird dann das gesamte Bremsmoment beim Abbremsen an die feststehende Maschinenwand übertragen.

Beim Abbremsen wird die Ankerscheibe über Federdruck an den Rotor mit den beiden Reibbelägen gedrückt. Dies erfolgt in kürzester Zeit (im Millisekundenbereich) und es entsteht ein Schlag- und Reibgeräusch (Quietschen) der Ankerscheibe an der Buchse, und zwar durch das abrupte Abbremsen.

Durch den Schlag der Ankerscheibe auf die Buchse, welche nur ein geringes Spiel zwischen Buchsenaußendurchmesser und Ankerscheibe hat, werden störende Lastübernahmegeräusche sowie Quietschgeräusche erzeugt. Speziell in der Bühnen- und Aufzugstechnik werden aber sehr leise Bremsen gefordert.

In der EP 0 907 840 B1 wurde mit einem O-Ring in der Buchse der axial bewegliche, aber drehsteif verbundene Spulenträger in Mittelstellung gehalten und beim Abbremsen eine dämpfende Wirkung erzielt. Diese Wirkung war jedoch nicht so optimal, so dass nach weiteren Lösungsmöglichkeiten gesucht wurde, um die Geräuschdämpfung noch zu verbessern.

Der Erfindung liegt die Aufgabe zugrunde, eine dämpfende Wirkung zwischen der Ankerscheibe und der Buchse zu erzielen. Die Buchse ist fest angeschraubt und die Ankerscheibe ist axial beweglich auf der Buchse gelagert, d.h. sie ist in Umfangsrichtung drehsteif mit der Buchse verbunden. Das Spiel soll einerseits so gering wie möglich sein, andrerseits soll die Ankerscheibe durch geeignete Maßnahmen axial leicht beweglich bleiben und in Umfangsrichtung soll eine Dämpfung erfolgen.

Die Lösung dieser Aufgabe wird durch die Merkmale des Anspruchs 1 erreicht, nämlich indem man zusätzlich zum O-Ring im oder am Außendurchmesser der Buchse wenigstens einen Kolbenführungsring vorsieht, der in einer zusätzlichen oder in derselben Nut eingebracht wurde.

Erfindungsgemäß wird also vorgesehen, dass im Bereich der Drehmomentübertragungsbuchsen (11) am Außenumfang wenigstens ein weiterer Kolbenführungsring (13) eingelegt ist, der in die Nut des O-Ringes oder in eine eigene Nut eingelegt ist und in Umfangsrichtung eine Dämpfung und in axialer Richtung ein Gleiten der Ankerscheibe bewirkt.

Der Kolbenführungsring lässt eine axiale Bewegung der Ankerscheibe mit sehr guten Gleiteigenschaften zu, aber in Umfangsrichtung wird eine Dämpfung erzielt, da die Ankerscheibe nicht mehr direkt auf die Buchse schlägt, sondern durch den Kolbenführungsring von der Buchse fern gehalten wird. Beim Abbremsen wird durch den Drehmomentstoß eine hohe Belastung in Umfangsrichtung übertragen, welche durch den Kolbenführungsring aufgenommen werden kann. Wäre nur ein O-Ring vorhanden, welcher auch zur Dämpfung beiträgt, könnte es bei hoher Belastung (stoßartiges Bremsmoment) trotzdem zu einem Anschlagen der Ankerscheibe an die Buchse kommen, was die unerwünschten Geräusche erzeugen würde.

Der O-Ring hat die Aufgabe, die Buchse 11 zu zentrieren und axial in der Ankerscheibe 4 festzuhalten, d.h. somit kann beim Transport und der Montage der Bremse die Drehmomentübertragungsbuchse 11 nicht entweichen.

Es kann vorgesehen werden, dass alternativ mehrere O-Ringe 12 und Kolbenführungsringe 13 eingelegt werden, die entweder rede für sich eine Nut erhalten oder zusammen eine teilen.

Außerdem kann vorgesehen werden, dass die Nuten für die O-Ringe 12 und Kolbenführungsringe 13 nicht in der Drehmomentübertragungsbuchse 11 sondern in der Bohrung der Ankerscheibe 4 vorhanden sind und somit die O-Ringe 12 und Kolbenführungsringe 13 in der Ankerscheibe 4 fest sind und auf der glatten Drehmomentübertragungsbuchse 11 axial gleiten.

Bevorzugt ist weiterhin, dass für die Bremsen mehrere Drehmomentübertragungsbuchsen 11 am Umfang verteilt, vorzugsweise drei oder sechs Drehmomentübertragungsbuchsen 11 gleichmäßig verteilt vorhanden sind.

Im übrigen kann vorgesehen werden, dass die Umfangsform der Drehmomentübertragungsbuchse 11 nicht rund sondern anders (z. B. oval, polygonmäßig oder rechteckig) gestaltet ist.

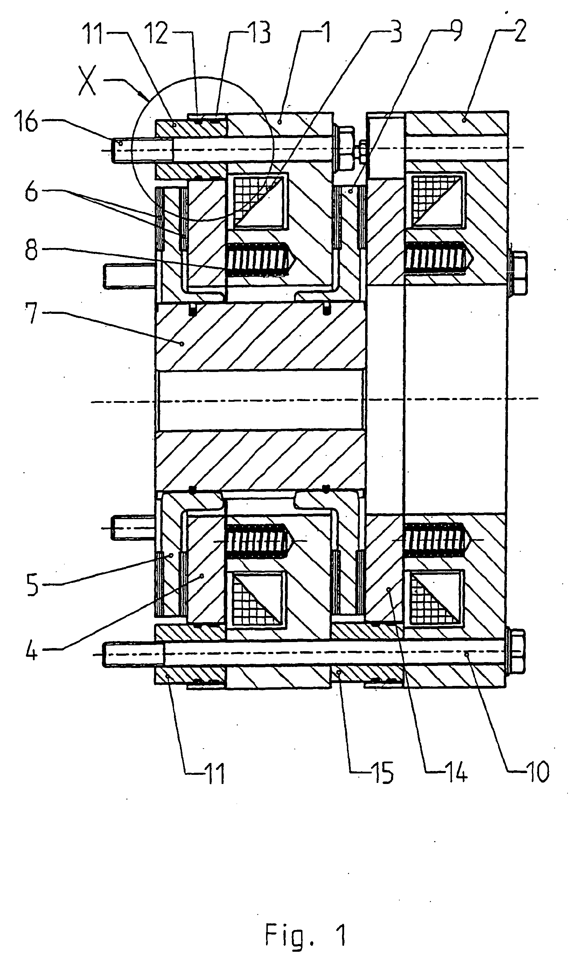

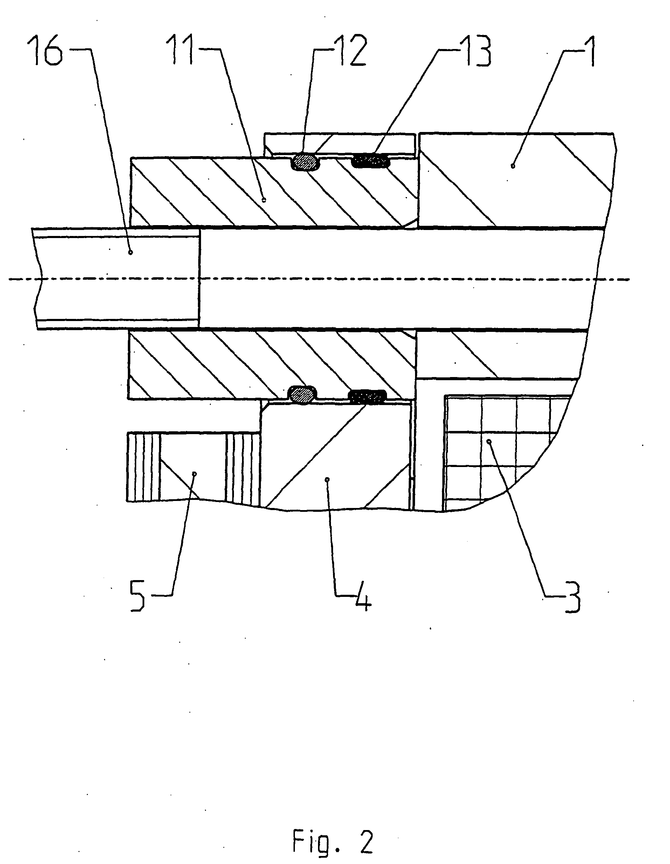

In den Figuren 1 und 2 der Zeichnungen ist ein Ausführungsbeispiel der Erfindung dargestellt:
Figur 1 zeigt eine ruhestrombetätigte elektromagnetische Federdruckbremse als Doppelbremse, wie sie in der Bühnen- und Aufzugstechnik als redundantes Bremssystem zur Anwendung kommt. Die Bremse 1 und die Bremse 2 werden über die Befestigungsschrauben 10 bzw. 16 und über die Drehmomentübertragungsbuchsen 15 bzw. 11 an eine nicht dargestellte Maschinenwand (links in Fig 1) angeschraubt.

Im Folgenden wird nur die Bremse 1 beschrieben, da die Bremse 2 die gleiche Funktionsweise hat.

Wird Strom auf die Magnetspule 3 gegeben, wird die Ankerscheibe 4 gegen die Druckfedern 8 an die Bremse 1 angezogen, und der Brems-Rotor 5 mit den beiden Reibbelägen 6 kann frei umlaufen. Der Rotor 5 ist über eine Umfangsverzahnung mit der ebenfalls auf dem Umfang verzahnten Nabe 7 verbunden, welche das Bremsmoment auf eine nicht dargestellte Welle überträgt.

Wird nun von der Bremse 1 der Strom weggenommen, bricht das Magnetfeld zusammen und die Ankerscheibe 4 wird mittels mehrerer auf dem Umfang verteilter Druckfedern 8 gegen die beiden Reibbeläge 6 an die nicht näher dargestellte Maschinenwand gedrückt. Dadurch wird der Rotor 5, welcher mit der verzahnten Nabe 7 verbunden ist, abgebremst, und die Welle kommt zum stehen. Bei diesem Abbremsvorgang wird die Ankerscheibe 4 in Drehrichtung gegen die Drehmomentübertragungsbuchse 11 gedrückt. Die Hälfte des Bremsmomentes wird somit über die Drehmomentübertragungsbuchse 11 übertragen, die andere Hälfte geht vom Bremsrotor 5 direkt über den linken Reibbelag 6 auf die nicht dargestellte Maschinenwand.

Figur 2 zeigt die Einzelheit X der Drehmomentübertragungsbuchse 11, bei der ein O-Ring 12 und zusätzlich der Kolbenführungsring 13 am Außendurchmesser der Drehmomentübertragungsbuchse 11 in jeweils einer Nut eingebracht sind, die einen kleinen axialen Abstand von einander haben, und zwar neben dem O-Ring im Bereich der axialen Erstreckung der Ankerscheibe 4. Die Befestigungsschraube 16 der Bremse 1 führt durch die Innenbohrung der Drehmomentübertragungsbuchse 11, wodurch die Drehmomentübertragungsbuchse 11 an die nicht dargestellt Maschinenwand und die Bremse 1 gepresst wird und somit die Hälfte des Bremsmomentes überträgt.

Der Kolbenführungsring 13 ist ein im Querschnitt weitgehend rechteckiges Kunststoffband aus PTFE mit guten Gleiteigenschaften, wird auf die Länge des Umfanges der Nut abgestimmt und in die vorgesehene Nut der Buchse 11 eingelegt. Der Kolbenführungsring 13 lässt hohe Flächenpressungen in Drehrichtung bei gleichzeitig guten axialen Gleiteigenschaften zu.

Nachdem die Ankerscheibe 4 beim Schalten der Bremse 1 nicht immer parallel (zur Drehebene des Rotors) bewegt wird, etwa aufgrund von ungleichen Magnetkräften, kommen auf die Kolbenführungsringe 13 der Buchsen 11 hohe Kräfte und Verkantungen, die ein O-Ring 12 allein nicht dämpfen kann.

Durch die guten axialen Gleiteigenschaften des bzw. der Kolbenführungsringe(s) 13 wird die Ankerscheibe 4 automatisch besser parallel zur Buchse 11 geführt und es kommt zu keiner Berührung mit der Buchse 11 und somit zu keinen unerwünschten Geräuschen aufgrund einer Verschiebung von Metall auf Metall.

### Bezugszeichenliste:

- 1: Bremse 1
- 2: Bremse 2
- 3: Magnetspule
- 4: Ankerscheibe
- 5: Rotor
- 6: Reibbeläge
- 7: verzahnte Nabe
- 8: Druckfedern
- 9: Rotor von Bremse 2
- 10: Befestigungsschrauben Bremse1 und Bremse 2
- 11: Drehmomentübertragungsbuchse
- 12: O-Ring
- 13: Kolbenführungsring
- 14: Ankerscheibe Bremse 2
- 15: Drehmomentübertragungsbuchse Bremse 2
- 16: Befestigungsschraube Bremse 1

## Patentansprüche

1. Ruhestrombetätigte elektromagnetische Federdruckbremse, mit Drehmomentübertragungsbuchsen (11), welche sich zwischen einer Maschinenwand und der Bremse (1) befinden und daran mit Befestigungsschrauben (16) befestigt werden, wobei eine axial bewegliche Ankerscheibe (4) auf ihrem Umfang mit Bohrungen versehen ist, in die die Drehmomentübertragungsbuchsen (11) eingreifen und somit in Umfangsrichtung das Bremsmoment übertragen, wobei am Außenumfang der Drehmomentübertragungsbuchsen (11) Nuten vorhanden sind, in welche O-Ringe (12) eingelegt sind,
**dadurch gekennzeichnet, dass**
im Bereich der axialen Erstreckung der Ankerscheibe (4) und
im Bereich zwischen der Ankerscheibe (4) und
den Drehmomentübertragungsbuchsen (11) am Außenumfang neben dem in einer Nut angeordneten O-Ring (12) wenigstens ein
im Querschnitt weitgehend rechteckiger
Kolbenführungsring (13) vorgesehen ist, der in die Nut des O-Ringes oder in eine eigene Nut eingelegt ist und in Umfangsrichtung eine Dämpfung und in axialer Richtung ein Gleiten der Ankerscheibe bewirkt.

2. Bremse nach Anspruch 1, **dadurch gekennzeichnet, dass** der Kolbenführungsring (13) ein Kunststoffband aus PTFE ist und auf die entsprechende Länge des Umfanges der Nut in der Drehmomentübertragungsbuchse (11) abgestimmt wird.

3. Bremse nach einem der voranstehenden Ansprüche, **dadurch gekennzeichnet, dass** mehrere O-Ringe (12) und Kolbenführungsringe (13) jeweils in eine oder mehrere Nuten eingelegt werden.

4. Bremse nach einem der voranstehenden Ansprüche, **dadurch gekennzeichnet, dass** die Nuten für die O-Ringe (12) und Kolbenführungsringe (13) in der Bohrung der Ankerscheibe (4), vorhanden sind und somit die O-Ringe (12) und Kolbenführungsringe (13) In der Ankerscheibe (4) fest sind und auf der glatten Drehmomentübertragungsbuchse (11) axial gleiten.

5. Bremse nach einem der voranstehenden Ansprüche, **dadurch gekennzeichnet, dass** für die Bremsen mehrere Drehmomentübertragungsbuchsen (11) am Umfang verteilt, vorzugsweise drei oder sechs Drehmomentübertragungsbuchsen (11) gleichmäßig verteilt vorhanden sind.

6. Bremse nach einem der voranstehenden Ansprüche, **dadurch gekennzeichnet, dass** die Umfangsform der Drehmomentübertragungsbuchse (11) z.B. oval, polygonmäßig oder rechteckig gestaltet ist.

7. Bremse nach einen der voranstehenden Ansprüche, **dadurch gekennzeichnet, dass** der Kolbenführungsring (13) aus PTFE oder einem vergleichbaren alternativen Material mit ähnlichen Glelteigenschaften und hohen zugelassenen Flächenpressungen gestaltet ist

## Claims

1. Quiescent-current-actuated electromagnetic spring pressure brake including torque transmission sleeves (11) disposed between a machine wall and the brake (1) and secured to the former by fastening screws (16), and an axially movable armature plate (4) having bores along its periphery to receive said torque transmission sleeves (11) in order to transmit the braking torque in a circumferential direction, said torque transmission sleeves (11) having on the outer periphery thereof grooves with O-rings (12) placed therein, **characterized in that** at least one piston guide ring (13) having an essentially rectangular cross section is provided in the area of the axial extension of the armature plate (4) and in the area between the armature plate (4) and the torque transmission sleeves (11) on the outer periphery of the latter adjacent the O-rings disposed in a groove, said piston guide ring being placed in the groove of said O-ring or in a separate groove and acting to provide a damping action in the circumferential direction and a sliding displacement of the armature plate in the axial direction.

2. Brake as in claim 1, **characterized in that** piston guide ring (13) comprises a band of a PTFE plastics material and is matched in length to the circumference of the groove in torque transmission sleeve (11).

3. Brake as in any of the preceding claims, **characterized by** a plurality of O-rings (12) and piston guide rings (13) being placed in one groove each or several to a groove.

4. Brake as in any of the preceding claim, **characterized in that** the grooves for O-rings (12) and piston guide rings (13) being provided in the bore of armature plate (4), whereby O-rings (12) and piston guide rings (13) are fixed in armature plate (4) and slide axially along torque transmission sleeve (11).

5. Brake as in any of the preceding claims, **characterized by** a plurality of torque transmission sleeves (11) spaced equidistantly along the periphery, such plurality preferably being three or six in number.

6. Brake as in any of the preceding claims, **characterized in that** torque transmission sleeve (11) is oval, polygonal or rectangular, for example, in circumferential shape.

7. Brake as in any of the preceding claims, **characterized in that** piston guide ring (13) is made of PTFE or a comparable alternative material featuring similar slip characteristics and similarly high permissible surface pressures.

## Revendications

1. Frein à ressort électromagnétique actionné par courant de repos, comprenant des douilles de transfert de couple (11) qui se trouvent entre une paroi de machine et le frein (1) et y sont fixées par des vis de fixation (16), dans lequel un disque d'induit (4) axialement mobile est muni sur sa circonférence d'alésages dans lesquels s'engagent les douilles de transfert de couple (11) et transfèrent ainsi le couple de freinage dans la direction circonférentielle, dans lequel il existe sur la circonférence extérieure des douilles de transfert de couple (11) des rainures dans lesquelles des joints toriques (12) sont insérés,
**caractérisé en ce que**
dans la zone de l'étendue axiale du disque d'induit (4) et
dans la zone entre le disque d'induit (4) et
les douilles de transfert de couple (11), sur la circonférence extérieure, à côté du joint torique (12) disposé dans une rainure, au moins un segment de guidage de piston (13)
de section transversale en grande partie rectangulaire
est prévu, qui est inséré dans la rainure du joint torique ou dans une rainure propre et provoque dans la direction circonférentielle un amortissement et dans la direction axiale un coulissement du disque d'induit.

2. Frein selon la revendication 1, **caractérisé en ce que** le segment de guidage de piston (13) est une bande de matière plastique en PTFE et adaptée à la longueur adéquate de la circonférence de la rainure dans la douille de transfert de couple (11).

3. Frein selon l'une quelconque des revendications précédentes, **caractérisé en ce que** plusieurs joints toriques (12) et segments de guidage de piston (13) sont respectivement insérés dans une ou plusieurs rainures.

4. Frein selon l'une quelconque des revendications précédentes, **caractérisé en ce que** les rainures pour les joints toriques (12) et les segments de guidage de piston (13) se trouvent dans l'alésage du disque d'induit (4) et **en ce que** les joints toriques (12) et les segments de guidage de piston (13) sont ainsi stationnaires dans le disque d'induit (4) et coulissent axialement sur la douille de transfert de couple (11) lisse.

5. Frein selon l'une quelconque des revendications précédentes, **caractérisé en ce que** pour les freins, il existe plusieurs douilles de transfert de couple (11) réparties sur la circonférence, de préférence trois ou six douilles de transfert de couple (11) réparties de façon régulière.

6. Frein selon l'une quelconque des revendications précédentes, **caractérisé en ce que** la forme circonférentielle de la douille de transfert de couple (11) est formée pour être par exemple ovale, polygonale ou rectangulaire.

7. Frein selon l'une quelconque des revendications précédentes, **caractérisé en ce que** le segment de guidage de piston (13) est formé en PFTE ou un matériau comparable en variante ayant des propriétés de coulissement et de hautes pressions superficielles admissibles similaires.
